(19) Europäisches Patentamt
European Patent Office
Office européen des brevets

(11) **EP 2 101 451 A1**

(12) **EUROPEAN PATENT APPLICATION**

(43) Date of publication:
**16.09.2009 Bulletin 2009/38**

(51) Int Cl.:
***H04L 12/56*** (2006.01)

(21) Application number: **08250840.9**

(22) Date of filing: **12.03.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **British Telecommunications public limited company**<br>**81 Newgate Street**<br>**EC1A 7AJ (GB)** | (72) Inventor: **The designation of the inventor has not yet been filed**<br><br>(74) Representative: **Wilson, Peter David**<br>**BT Group Legal**<br>**Intellectual Property Department**<br>**PP C5A, BT Centre**<br>**81 Newgate Street**<br>**London EC1A 7AJ (GB)** |

(54) **Channel selection in an ad hoc wireless network**

(57) An improved method of selecting a channel in an ad hoc wireless network in which each node using a given channel periodically evaluates the transmission power against a power threshold to ensure that the signal to interference and noise ratio at each node is acceptable.

Figure 2

## Description

The present invention relates to a method of selecting a channel in a wireless network, and in particular to a method of selecting a channel in an ad hoc wireless network.

Ad hoc networks are generally defined as a collection of mobile nodes which communicate with each other over a wireless channel with no fixed infrastructure. The nodes may, for example, form a Bluetooth or WiFi network, although many other applicable network architectures and signal transmission protocols are known. The nodes may comprise personal mobile telecommunications devices, personal digital assistants, remote sensors and many other devices. Central to the idea of ad hoc networks is the concept of multi-hop, where each node can act as a router and forward packets on behalf of other nodes towards their destination.

This is in contrast to conventional cellular systems where each mobile device communicates directly to a base station, which controls all transmission and routing functions. An essential feature of ad-hoc networks, which has no parallel in wired networks, is the relationship between power control, call admission control, network topology and routing algorithms.

Ad hoc wireless networks are well known, in which nodes join and leave the network over time. When nodes communicate with one another signals from one pair of nodes may interfere with the signals being sent by a second pair of nodes. Thus, the signal to interference ratio plus noise ratio (SINR) at each node needs to be maintained at a satisfactory level, typically by controlling the operating power of the nodes and the directive patterns of their antennas. The SINR for each node can fluctuate essentially randomly as nodes enter and leave the ad hoc network and so an effective way of estimating the SINR and controlling the nodes is needed.

There are a number of parameters that can be used to control the performance of the physical layer of ad hoc wireless networks, for example, modulation, transmit power, spreading code and antenna beams. By controlling these transceiver parameters adaptively and in an intelligent manner, the capacity of the system can be increased significantly.

In early works on power control (J. M. Aein, Power balancing in systems reemploying frequency reuse, COMSAT Tech. Rev., pp. 277 - 299, 1973), balancing the SINRs of all radio links was first proposed via a centralized operation system. However, there has been a subsequent shift to a system of distributed SINR-balancing algorithms (see G. J. Foschini et al, A simple distributed autonomous power control algorithm and its convergence, IEEE Transactions on Vehicular Technology, Vol. 42, No. 4, Nov. 1993 and S.A. Grandhi et al, Centralized power control in cellular radio systems, IEEE Transactions on Vehicular Technology, 42(4), pp. 466 - 468, 1993). Although distributed power control schemes are more practical than centralized ones, in a dynamic network environment such an approach would require the removal of some existing calls in order to balance the overall quality of service (QoS) requirements for the rest of the existing calls (see M. Andersin et al, Gradual removals in cellular radio networks, Wireless Networks, vol. 2, no. 1, pp. 27 - 43, (1996)).

The concept of active link protection (N. Bambos et al, Channel access algorithms with active link protection for wireless communications networks with power control, IEEE/ACM Transactions on Networking 8(5), pp. 583 - 597, (2000)), was introduced as a means to minimize the degradation of SINR of current active links as new links are accessing the channel. Such methods have a number of disadvantages: for example for new links that are being rejected by the system, the amount of time spent waiting before exiting from the system would constitute a waste of power resources and therefore generates undue interference to other active link users.

An admission-centric power control has been proposed in which each incoming call first monitors pilot tones from all the active base stations in order to measure the base-to-mobile power gains. Having global information, all uplinks can then compute the required power levels to satisfy the SINR threshold or until the maximum power constraint of an uplink is violated, in which case the new call is rejected. Here the method assumes that only one new call is trying to be admitted at a time and that global information of an existing feasible system can be obtained.

Further studies (S.A. Grandhi et al "Centralized power control in cellular radio systems", IEEE Transactions on Vehicular Technology, 42(4), pp. 466 - 468, 1993 and J. Zander, Distributed Co-channel Interference Control in Cellular Radio Systems, IEEE Transactions on Vehicular Technology, Vol. 41, No. 3, pp. 305-311, August 1992) show that when the information of the global link gain matrix is available, and by neglecting the white noise factor the maximum achievable signal-to-interference (SIR) can be determined, and provided it is greater than the threshold requirement, then there exists a feasible solution for all power constraints. Thus, one of the challenges of call admission control in a wireless system with power control is the prediction of the maximum achievable SIR when the global link gain information is not available.

A centralized power control (CPC) scheme has been proposed (Grandhi *et al, op cit*) to compute transmitter power levels so as to obtain a maximum achievable SIR for all the receiving links. Following such a proposed CPC scheme, a predictor for the maximum achievable SIR of a new link or node trying to obtain admission into a wireless system was presented (Chin et al. "Predictive call admission control algorithm for power-controlled wireless systems," Ad-Hoc Now 2006, Lecture Notes in Computer Science, Vol. 4104" pp. 414 - 427, (2006)). This assumed that the new incoming pair of nodes do not have any global information concerning all other link gains in the feasible system. Instead, it predicts the actual maximum achievable SIR of the network system should it be admitted.

For the case of extending power control (M.M.-L. Cheng et al, "Performance evaluation of distributed measurement-based dynamic channel assignment in local wireless communications", IEEE Journal on Selected Areas in Communications, Vol 14, No. 4, pp. 698 - 710, May 1996), channel allocation in wireless networks is proposed based on the least interference criterion, that is selecting the channel with the least interference would require the least transmission power to maintain the SINR threshold. Later this problem was addressed (G. Kulkarni et al, "Channel Allocation for OFDMA based Wireless Ad-hoc Networks", SPIE International Conference on Advanced Signal Processing Algorithms, Architectures, and Implementations, Seattle, WA, July 2002.)) by the spatial reuse frequency channels in FDMA based ad hoc networks using adaptive modulation techniques. Power control is then used to maintain the minimum QoS requirement caused by frequency reuse. Extension of this work for OFDM based ad hoc networks is given in Kulkarni *et al.*

Another approach to mitigate co-channel interference effects and increase the network capacity is to avoid strong interferers by dynamically assigning the channels to the users (DJ Goodman et al, "Distributed dynamic channel assignment schemes", Proc. IEEE Vehicular Technology Conference, pp. 532 - 535, 1993). Of late there has been much research on integrating distributed dynamic channel and power allocation (DCPA) schemes (see, amongst others J. C.-I. Chuang and N.R. Sollenberger, "Performance of autonomous dynamic channel assignment and power control for TDMA/FDMA wireless access", IEEE J. Select. Areas Commun., Vol 12, pp. 1314 - 1324, Oct. 1994). However these DCPA schemes do not integrate power control and channel assignment as one entity but rather are done separately. It has been suggested (A. H. M. Rad and V. W. S. Wong, Joint optimal channel assignment and congestion control for multi-channel wireless mesh networks, Proc. of IEEE International Conference on Communications, Istanbul, June 2006) that the a joint optimal channel assignment and congestion control (JOCAC) be used, giving a decentralized utility maximization problem with constraints arising from interference of neighbouring transmissions.

The main drawback to these approaches is the assumption that the network structure is quasi-static. It may be assumed that the time taken to assess the channel properties is less than the relative timescale of mobility of other co-channel users, and hence do not accurately capture the dynamics of stochastic time channels. In the paper by Holliday *et al.* (T. Holliday et al, "Distributed power and admission control for time varying wireless networks", Technical Report, Stanford University, 2004), the authors relaxed this assumption and permitted the links between network nodes to be time-varying stochastic processes. A new criteria for power optimality in wireless ad-hoc networks was proposed and it was shown that a power allocation that satisfies the new optimality criteria can be extended to call admission control in a time-varying wireless networks. However their method focuses on converging to the optimal power allocation for an ad-hoc network in a time-varying channel environment which is unrealistic to attain.

According to a first aspect of the present invention, there is provided a method of selecting a channel in an ad hoc wireless method for use by a sending node and a receiving node, the method comprising the steps of: (a) choosing a channel for potential use; (b) determining the number and the position of other nodes using the channel chosen in step (a); (c) for each of a plurality of iterations, (1) determining a plurality of transmission parameters; (2) determining an admission probability value in accordance with the plurality of transmission parameters determined in step (1); (d) determining a mean admission probability value in accordance with each of the determined admission probability values; and (e) comparing the mean admission probability with a predetermined threshold; and (f) allowing the sending node and the receiving node to used the channel selected in step (a) if the mean admission probability is equal to or greater than the predetermined threshold.

The method preferably comprises the further steps of: (g) adjusting the transmission power of all of the nodes using the channel selected in step (a) to control the interference caused by other nodes; and (h) preventing the sending node and the receiving node from using the channel selected in step (a) if the transmission power of any of the nodes using the channel selected in step (a) is greater than a predetermined threshold. Each node using the channel selected in step (a) preferably repeats steps (g) and (h) periodically. Each node may repeat steps (g) and (h) substantially every 100 ms.

According to a second aspect of the present invention, there is provided a computer program product, comprising computer executable code for performing a method as described above.

Embodiments of the present invention will now be described, by way of example only, with reference to the accompanying drawings in which:

Figure 1 shows a schematic depiction of ad hoc wireless network; and
Figure 2 shows a flowchart that describes the operation of an algorithm in accordance with a method according to the present invention

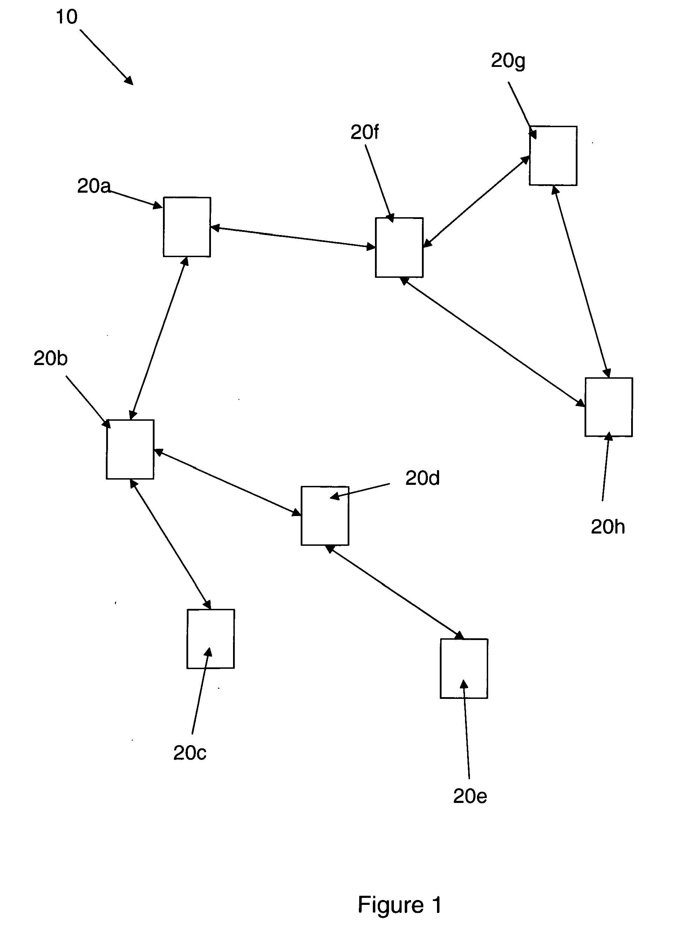

Figure 1 shows a schematic depiction of ad hoc wireless network 100 in which a plurality of network nodes 20 are in wireless communication with one or more of the other nodes. For example, node 20b has a communication link with three other nodes (nodes 20a, 20c & 20d) whereas node 20e only has a link to one other node (node 20d). The ad hoc wireless network may be entirely self-contained or one or more of the nodes may have a connection to a further

EP 2 101 451 A1

network, such as a DSL connection to the internet, to enable onward connectivity.

As the network is an ad hoc network, new nodes may wish to make a connection to one of the existing nodes or an existing node may wish to make a connection to a node that it is not currently connected to. The present invention provides an improved method for determining how such a connection can be made.

In the present invention the quasi-static assumption in the network structure of wireless ad-hoc networks will be overlooked. Rather than proposing a new criterion for power optimality, the present invention will model the stochastic time aspect of the link gains between communicative nodes within the call admission control framework. Owing to the log-normal properties of the gain of each communicative pairs, the link gains can be modelled as a stochastic process which follows a geometric Brownian motion (GBM). But in the context of CAC where communicative nodes can either enter or leave the network, the simple diffusion model of GBM does not capture the features of CAC in its entirety. Therefore it is proposed to incorporate jumps in the dynamics of the network structure where the sum total interference experienced by a communicative pair can either suddenly drop, reducing drastically the need for a high power to attain the required SINR, or there could be a surge of interference unexpectedly causing the entire co-channel network structure to increase their power levels to maintain the SINR requirement.

Based on the stability conditions and using the jump-diffusion process, it is possible to formulate the probability for a new communicative pair whether it can attain the SINR requirements or not in the network system. Hence, not only is it possible to optimise the number of co-channel links that the system can accommodate, and to include mobility patterns and traffic conditions using a prediction mechanism, the algorithm is sufficiently dynamic to update its prediction of the channel quality. Furthermore in tandem with the CAC prediction mechanism this invention also embodies a channel selection strategy as a means to intelligently assign the least interfering channel to the new pair-wise user nodes so as to optimize the maximum number of communicative pairs within a given system.

Consider an ad hoc network system with $M$ active pairs of co-channel communications, where $M > 1$. Each communication link consists of a receiver node and a sender node such that there exists a subset of sender nodes $S=\{s_1,s_2,...,s_M\}$ transmitting packets of data to another subset of receiving nodes $R=\{r_1,r_2,...,r_M\}$. The transmission $t_i: s_i \rightarrow r_i$, $i=1,2,...,M$ is from a sender node to a receiver node, or to a relay node in multi-hop case. For the following analysis, the downlink case is of interest, where a sender node $s_i$ transmits to the receiver node $r_i$.

The objective of power control in such a dynamic environment is to ensure that all communication pairs achieve an SINR above a required threshold. Under fixed channel gain assumption the implementation of power control could be in either of the following two forms: centralised or distributed. For the case when the channel gains vary with time $t$, $G_{r_i s_i}(t)$ represents the gain of the communication link between the $r_i$ th receiver node and the $s_i$ th sender node, such that

$$G_{r_i s_i}(t) = \frac{\left(z_{r_i s_i}(t)\right)^2 \cdot S_{r_i s_i}(t)}{d_{r_i s_i}(t)^{\nu}} \qquad [1]$$

where at time $t$, $(z_{r_i s_i}(t))^2$ models the multi-path fading where $z_{r_i s_i}(t)$ follows a Rayleigh distribution, $S_{r_i s_i}(t)$ is the attenuation factor at time $t$, $d_{r_i s_i}(t)$ denotes the distance at time $t$ between communicative pairs, and the subscripts $r_i$ and $s_i$ denote the receiver and sender nodes respectively. The parameter $v$ is a constant that models the propagation path loss. It is assumed that $10\log_{10}S_{r_i s_i}(t) \sim N(0, \sigma^2)$, $1 \leq i \leq M$, are independent, log normal, identically distributed, random variables with 0 dB expectation and $\sigma^2$ log variance. The value of $\sigma$ in the range of 4-10 dB and the propagation constant $v$ in the range of 3-5 usually provide good models for urban propagation non-line-of-sight (Lee (1989)).

In general, given that there are $M$ pair-wise interfering nodes in the system, the SINR of the $r_i$ th receiver node can be denoted by

$$\gamma_{r_i}(t) = \frac{G_{r_i s_i}(t)P_{s_i}(t)}{\sum_{j \neq i} G_{r_i s_j}(t)P_{s_j}(t) + \eta_{r_i}(t)}, \ 1 \leq i, j \leq M \qquad [2]$$

where at time $t$, $P_{s_i}(t)$ is the transmit power of sender node $s_i$ and $\eta_{r_i}(t) > 0$ is the white noise of detected by node $r_i$. For each receiver node $r_i$ there is some SINR threshold requirement denoted by $\gamma_{r_i}^{\infty} > 0$, representing the receiver node $r_i$ minimal quality of service (QoS) it must support in order to operate successfully. Following the above arguments then it can be seen that

$$\gamma_{r_i}(t) \geq \gamma_{r_i}^{\infty}, \; 1 \leq i \leq M. \qquad [3]$$

In matrix format, the relationships [2] and [3] can be expressed as

$$(\mathbf{I} - \mathbf{F}(t))\mathbf{P}(t) \geq \mathbf{\Theta}(t), \; \mathbf{P}(t) > \mathbf{0} \qquad [4]$$

where $\mathbf{\Theta}(t) = \left[ \dfrac{\gamma_{r_1}^{\infty} \eta_{r_1}(t)}{G_{r_1 s_1}(t)}, \dfrac{\gamma_{r_2}^{\infty} \eta_{r_2}(t)}{G_{r_2 s_2}(t)}, \; \ldots, \; \dfrac{\gamma_{r_M}^{\infty} \eta_{r_M}(t)}{G_{r_M s_M}(t)} \right]^T$ , $\mathbf{P}(t) = {}_{\lfloor} P_{s_1}(t), P_{s_2}(t), \ldots,$

$P_{s_M}(t)_{\rfloor}^T$ and $\mathbf{F}(t) = (F_{ij}(t))$ is a matrix having the entries $F_{ij}(t) = 0$ for $i = j$ and $F_{ij}(t) = \dfrac{\gamma_{r_i}^{\infty} G_{r_i s_j}(t)}{G_{r_i s_i}(t)}$ for $i \neq j$, $1 \leq i,j \leq M$.

Note that $\mathbf{F}(t)$ has non-negative elements and it can be shown that $\mathbf{F}(t)$ is also irreducible, that is each row of $\mathbf{F}(t)$ has no more than one zero element.

It can be shown that for a fixed channel gain (see N Bambos, et al, "Channel access algorithms with active link protection for wireless communications networks with power control", IEEE/ACM Transactions on Networking 8(5), pp. 583 - 597, (2000)). )) that the following statements, which comprise Theorem 1, are equivalent:

Theorem 1:

    1. There exists a power vector $\mathbf{P} > \mathbf{0}$ such that $(\mathbf{I} - \mathbf{F})\mathbf{P} \geq \mathbf{\Theta}$
    2. The spectral radius of $\mathbf{F}$, $\rho_F < 1$
    3. The matrix $(\mathbf{I} - \mathbf{F})^{-1}$ exists and has positive entries

where $\mathbf{\Theta} = \left[ \dfrac{\gamma_{r_1}^{\infty} \eta_{r_1}}{G_{r_1 s_1}}, \dfrac{\gamma_{r_2}^{\infty} \eta_{r_2}}{G_{r_2 s_2}}, \; \ldots, \; \dfrac{\gamma_{r_M}^{\infty} \eta_{r_M}}{G_{r_M s_M}} \right]^T$ , $\mathbf{F} = (F_{ij})$ such that $F_{ij} = 0$ for $i = j$ and $F_{ij} = \dfrac{\gamma_{r_i}^{\infty} G_{r_i s_j}}{G_{r_i s_i}}$.

Based on this, it can be deduced that if $\rho_F < 1$ then $(\mathbf{I} - \mathbf{F})$ is non-singular with $M$ independent rows and its inverse has positive entries. Because $(\mathbf{I} - \mathbf{F})$ is invertible hence there exists a unique solution

$$\mathbf{P}^* = (\mathbf{I} - \mathbf{F})^{-1} \mathbf{\Theta} > \mathbf{0} \qquad [5]$$

which lies at a vertex of all the linear constraints.

It has been proposed (Foschini and Miljanic (1993)) to use an iterative method of the following form

$$\mathbf{P}^{(k+1)} = \mathbf{F}\mathbf{P}^{(k)} + \mathbf{\Theta} \qquad [6]$$

where $k = 1, 2, \ldots$ to find $\mathbf{P}^* = (\mathbf{I} - \mathbf{F})^{-1} \mathbf{\Theta} > \mathbf{0}$.

If $(\mathbf{I} - \mathbf{F})$ is a non-singular matrix then the rate of convergence of the iterates is a geometric one such that $\|\mathbf{P}^{(k)} - \mathbf{P}^*\| = O(\alpha^k)$, $0 < \alpha < 1$.

However for the case when the channel gains $G_{r_i s_i}(t)$ are allowed to vary in time then for a small time interval

$_L t, t + \Delta t \rfloor$, the following iterative procedure

$$\mathbf{P}(t + \Delta t) = \mathbf{F}(t)\mathbf{P}(t) + \mathbf{\Theta}(t) \qquad\qquad [7]$$

will not converge to a deterministic saturated point. Furthermore, as the power levels of all the sender nodes are also time-varying, the original QoS requirement that requires [3] to hold at all times might not be possible.

In an alternative approach (Holliday *et al.* (2004)), it was proposed that since $\mathbf{F}(t)$ is a time-varying matrix, the spectral radius of $\mathbf{F}(t)$ no longer holds in the convergence condition of Theorem 1, but rather it is replaced by the Lyapunov exponent, $\lambda_F$ defined as

$$\lambda_F = \lim_{t \to \infty} \frac{1}{t} \log \left\| \prod_{k=0}^{t} F(k) \right\| \quad . \qquad\qquad [8]$$

Accordingly, a new theorem, Theorem 2, can be posited.

Theorem 2:

Within the time interval $[t, t + \Delta t]$ if the sender nodes power are updated according to the iterative procedure

$\mathbf{P}(t + \Delta t) = \mathbf{F}(t)\mathbf{P}(t) + \Theta(t)$ and $\lambda_F < 0$ then $\lim_{t \to \infty} E\left[\log \gamma_{r_i}(t)\right] = \log \gamma_{r_i}^{\infty}$ for all $i = 1, 2, ..., M$ where

$$\gamma_{r_i}(t) = \frac{G_{r_i s_i}(t) P_{s_i}(t)}{\sum_{j \neq i} G_{r_i s_j}(t) P_{s_j}(t) + \eta_{r_i}(t)}, \ 1 \leq i, j \leq M \qquad\qquad [9]$$

As a consequence of Theorem 2, instead of aiming for $\gamma_{r_i} = \dfrac{G_{r_i s_i} P_{s_i}}{\sum_{j \neq i} G_{r_i s_j} P_{s_j}(t) + \eta_{r_i}} \geq \gamma_{r_i}^{\infty}$ for $i, j =$

$1, 2, ..., M$ in a static-time environment, in a time-varying condition, the power update formula aims for

$$\lim_{t \to \infty} E\left[\gamma_{r_i}(t)\right] \geq \gamma_{r_i}^{\infty} \qquad\qquad [10]$$

since from the Jensen's inequality the identity $\log E_L \gamma_{r_i}(t) \rfloor \geq E_L \log \gamma_{r_i}(t) \rfloor$ is known.

The power control in a time-varying wireless network aims for $\lim_{t \to \infty} E\left[\gamma_{r_i}(t)\right] \geq \gamma_{r_i}^{\infty}$ so as to determine whether a new communicative pair is able to make an admissible transmission. In a time-varying wireless network environment where nodes enter and leave in a dynamic manner such a pre-condition imposed on the expected value of [3] is hard to achieve.

In order for the power levels to converge according to the results of Theorem 2, the power updating algorithm as proposed by Holliday *et al.* (2004) becomes

$$\mathbf{P}(t + \Delta t) = \overline{\mathbf{F}}(t)\mathbf{P}(t) + \overline{\mathbf{\Theta}}(t)$$

where $\overline{F}(t)=(\overline{F}_{ij}(t))$ such that $\overline{F}_{ij} = 0$ for $i = j$, $\quad \overline{F}_{ij} = \dfrac{\gamma_{r_i}^{\infty} E\left[G_{r_i s_j}(t)\right]}{E\left[G_{r_i s_i}(t)\right]}$, and

$$\overline{\Theta}(t) = \left[\frac{\gamma_{r_1}^{\infty} E\left[\eta_{r_1}(t)\right]}{E\left[G_{r_1 s_1}(t)\right]}, \frac{\gamma_{r_2}^{\infty} E\left[\eta_{r_2}(t)\right]}{E\left[G_{r_2 s_2}(t)\right]}, \ldots, \frac{\gamma_{r_M}^{\infty} E\left[\eta_{r_M}(t)\right]}{E\left[G_{r_M s_M}(t)\right]}\right]^T.$$

To design an algorithm following the above criteria is impractical unless it is possible to know in advance the probability distribution and hence the expected value of the matrix process $\mathbf{F}(t) = (F_{ij}(t))$.

Therefore it is proposed to abandon the methodology embodied in Theorem 2 and instead model the SINR as a continuous time stochastic process in the form of jump-diffusion process. This can be justified for the following reasons:

- the jump-diffusion process provides a good approximation in tracking the evolution of small and sudden changes for quantities greater than zero such as defined in [3]
- an analytical solution for such a model exists and can easily be implemented on the wireless card.
- it is possible to interpret the jump part of the model as the network response to new incoming calls or some existing calls exiting the system. More precisely, in the absence of incoming or calls leaving, the links simply follows a geometric Brownian motion. If there are new call arrivals or call leavings, they can be modeled as a Poisson process, and the link gains changes in response to the jump size distribution.

Assuming that the channel gain is fixed, then the following conditions (Olafsson (2006)) will cause the communications links to have a feasible power vector.

Theorem 3 - non-singularity condition:

If the matrix ($\mathbf{I}$ - $\mathbf{F}$) is row diagonally dominant such that for all $i$=1,2,...,$M$

$$\frac{G_{r_i s_i}}{\gamma_{r_i}^{\infty}} \geq \sum_{j \neq i} G_{r_i s_j} \qquad\qquad [11]$$

then ($\mathbf{I}$ - $\mathbf{F}$)$^{-1}$ exists and all the real parts of the eigenvalues of ($\mathbf{I}$ - $\mathbf{F}$) are positive.

Theorem 4 - stability condition:

If ($\mathbf{I}$ - $\mathbf{F}$) is row diagonally dominant for all $i$=1,2,...,$M$ then the power constraints ($\mathbf{I}$ - $\mathbf{F}$)$\mathbf{P} \geq \Theta$, $\mathbf{P} > \mathbf{0}$ has a unique solution $\mathbf{P}^* = (\mathbf{I}$ - $\mathbf{F})^{-1} \Theta > \mathbf{0}$.

Based on the concept of the matrix ($\mathbf{I}$ - $\mathbf{F}$) being row diagonally dominant, the inequality [11] reveals two important factors on the stability of the power control constraints.

- The lower the SINR threshold, $\gamma_{r_i}^{\infty}$ for the transmission between $s_i$ and $r_i$, the easier it is to achieve and maintain the stability condition.
- By reducing the channel link gains from interfering senders $s_j, j \neq i$, the interference measured by the transmission pair ($r_i, s_i$) can then be reduced.

The right-hand-side of [11] can be reduced by using smart or beamforming antennas and hence ($r_i, s_i$) can achieve the stability condition and therefore increases the spatial and channel reuse within the system.

In a method according to the present invention it is intended to exploit in real time the sufficient condition property for each of the transmission pairs in order to maximize the number of co-channel links the system is able to accommodate. In the context of time-varying wireless networks, for each new communication pair ($r_i, s_i$) entering into the system, it is not possible to measure at a localised level that the following expression

$$G_{r_i s_i}(t) \geq \gamma_{r_i}^{\infty} \sum_{j \neq i} G_{r_i s_j}(t) \qquad\qquad [12]$$

can hold true in all cases so that $(r_i, s_i)$ is able to transmit using the same channel as other users.

Therefore, to exploit the time-dimension aspect of CAC, for a small time interval $\Delta t = t/N$ the sufficient condition can be revised to give the following probability requirement

$$\bar{p} = \frac{1}{N} \sum_{k=0}^{N} \mathrm{Prob}\left( G_{r_i s_i}(k \cdot \Delta t) \geq \gamma_{r_i}^{\infty} \sum_{j \neq i} G_{r_i s_j}(k \cdot \Delta t) \right) \geq 1 - \alpha \qquad [13]$$

where $\alpha \in (0,1)$ for the pair $(r_i, s_i)$ to be successfully admitted into the system at time $t$.

In order to obtain a closed-form solution for equation [13], the evolution of the link gains as a jump-diffusion model is modelled so as to capture the dynamics of time-varying channel environment. It should be noted that the model under consideration here is that of an ad-hoc wireless network with purely distributed control where new users are to make local decisions regarding the stability of the network.

Let $V = V_{r_i s_i}(t) = \dfrac{G_{r_i s_i}(t)}{\sum\limits_{j \neq i} G_{r_i s_j}(t)}$ denote the ratio of the link gains between the communication pair $(r_i, s_i)$

and the sum of received interfering link gains with respect to receiver $r_i$. Owing to the log-normal properties of the link gains and coupled with call drops and departures within the system, the dynamics of V can be modelled as a jump-diffusion process

$$\frac{dV}{V} = (\mu - \lambda v)\,dt + \sigma\,dW + (J - 1)\,dN \qquad\qquad [14]$$

where $\mu, \lambda, v, \sigma \in \Re_{+}$, $W$ is a standard Brownian motion, $dN$ is a Poisson process with intensity parameter (net arrival rate of new calls) $\lambda$ such that

$$dN = \begin{cases} 1 & \text{with probability} \quad \lambda\,dt \\ 0 & \text{with probability}\, 1 - \lambda\,dt \end{cases} \qquad [15]$$

The random variable $J > 0$ is the jump amplitude with expected value equal to $v + 1$ and it corresponds to the rate of calls entering or leaving the system. The parameter $\mu$ represents the expected instantaneous rate of change of the ratio of link gains. Furthermore it is assumed that $\log(J) \sim N(\mu_J, \sigma_J^2)$ such that

$v := \exp(\mu_J + \sigma_J^2 / 2) - 1$ and that $dW$, $dN$, and $J$ are mutually independent.

It can be seen that:

$$d(\log V) = \frac{1}{V} dV - \frac{1}{2 V^2}(dV^2) + \frac{1}{3 V^3}(dX^3) - \frac{1}{4 V^4}(dV^4) + \ldots$$

$$= \left(\mu - \lambda v - \frac{1}{2}\sigma^2\right) dt + \sigma\, dW + \left(\sum_{i=1}^{\infty}(-1)^i(J-1)^i\right) dN$$

$$= \left(\mu - \lambda v - \frac{1}{2}\sigma^2\right) dt + \sigma\, dW + \log(J)\, dN\ .$$

Letting $N_{\Delta t}$ be the total number of jumps from time $t$ to time $t + \Delta t$ and taking note that $\log(J) \sim N\left(\mu_J, \sigma_J^2\right)$ and assuming $dW$, $dN$, and $J$ are mutually independent then

$$\log V(t+\Delta t) | (X_t, N_{T-t} = k) \sim N\left[\log V(t) + \left(\mu - \lambda v - \frac{1}{2}\sigma^2\right)\Delta t + k\mu_J\ ,\ \sigma^2\Delta t + k\sigma_J^2\right]\ .$$

Hence

$$P\left(V(t+\Delta t) \geq \gamma_{r_i}^{\infty}\ |V(t)\right)\ =\ P\left(\log X_{t+\Delta t} \geq \log \gamma_{r_i}^{\infty} | V(t)\right)$$

$$=\ \sum_{k=0}^{\infty}\ P\left(N_{T-t} = k\right) \times P\left(\log V(t+\Delta t) \geq \log \gamma_{r_i}^{\infty} | V(t), N_{T-t} = k\right)$$

$$=\ \sum_{k=0}^{\infty} \frac{e^{-\lambda\Delta t}(\lambda\Delta t)^k}{k!} \cdot P\left(Z \geq \frac{\log \gamma_{r_i}^{\infty} - \log V(t) - \left(\mu - \lambda v - \frac{1}{2}\sigma^2\right)\Delta t - k\mu_J}{\sqrt{\sigma^2\Delta t + k\sigma_J^2}}\right)$$

$$=\ \sum_{k=0}^{\infty} \frac{e^{-\lambda\Delta t}(\lambda\Delta t)^k}{k!}\left[1 - \Phi\left(\frac{\log \gamma_{r_i}^{\infty} - \log V(t) - \left(\mu - \lambda v - \frac{1}{2}\sigma^2\right)\Delta t - k\mu_J}{\sqrt{\sigma^2\Delta t + k\sigma_J^2}}\right)\right]$$

where $Z - N(0, 1)$ and $\Phi$ is the standard normal cumulative distribution function.

For the IEEE 802.11 MAC protocol each node maintains for each destination a weighted history of the received SINR for successful transmission and the threshold at which packet loss occurs. This data can be used in the estimation of $\mu$, $\sigma$, $\lambda$, $\mu_J$, $\sigma_J \in \mathfrak{R}_+$

For a continuous time process where $\Delta t \to 0$, the rate of return $R_i(t)$ can be set as

$$R_i(t) = \log\left(\frac{V_i(t)}{V_{i-1}(t)}\right) \qquad [16]$$

where $V_i(t)= V(t + i\Delta t)$ and $V_{i-1}(t)= V(t + (i-1)\Delta t)$. For a window size of n the unbiased estimates for the parameters $\mu$, $\sigma$, $\lambda$, $\mu_J$, $\sigma_J \in \mathfrak{R}_+$ are

$$\hat{\mu} = \frac{1}{n}\sum_{i=1}^{n} R_i(t) \qquad [17]$$

$$\hat{\sigma}^2 = \frac{1}{(n-1)\cdot\Delta t}\sum_{i=1}^{n}(R_i(t) - \hat{\mu})^2 \qquad [18]$$

$$\hat{\lambda} = \frac{1}{n}\sum_{i=1}^{n}\mathbf{1}_{\{|V_i(t)-V_{i-1}(t)| \geq \delta_v\}} \qquad [19]$$

$$\hat{\mu}_J = \frac{1}{n}\sum_{i=1}^{n}\log(J_i) \qquad [20]$$

$$\hat{\sigma}_J^2 = \frac{1}{(n-1)\Delta t}\sum_{i=1}^{n}\left(\log(J_i) - \hat{\mu}_J\right)^2 \qquad [21]$$

where $\mathbf{1}_{\{|V_i(t)-V_{i-1}(t)| \geq \delta_v\}} = \begin{cases} 1 & |V_i(t) - V_{i-1}(t)| \geq \delta_v \\ 0 & |V_i(t) - V_{i-1}(t)| < \delta_v \end{cases}$ such that $\delta_v$ is a pre-set parameter, and the $i$-th jump amplitude is defined as $J_i = |V_i(t) - V_{i-1}(t)|$.

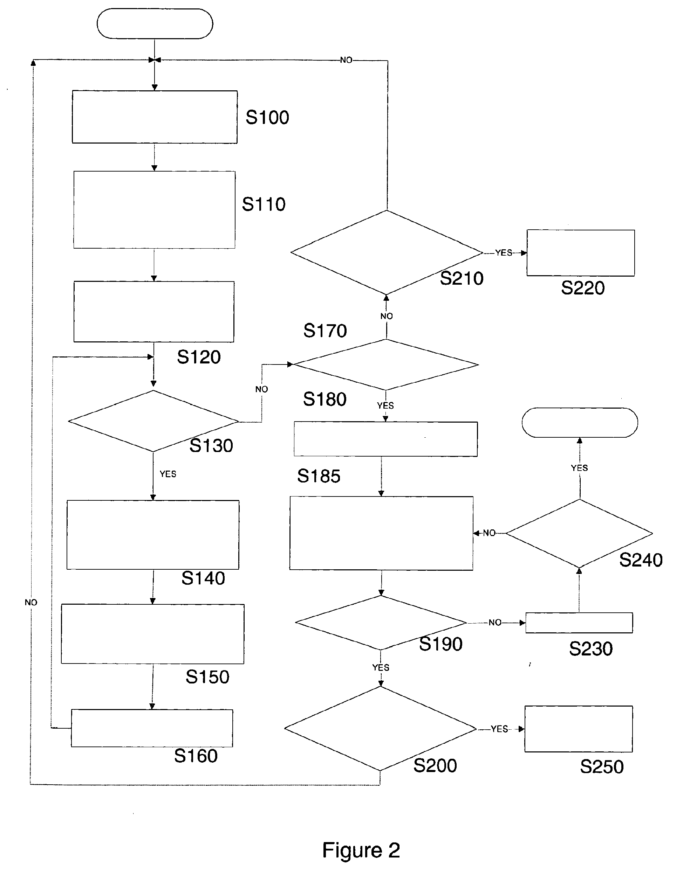

Figure 2 shows a flowchart that describes the operation of an algorithm in accordance with a method according to the present invention. The method is based upon the theoretical analysis set out above and the following assumptions:

- At an instantaneous time, each communication link consists of a sender node and a receiver node
- All the nodes within the same network channel are self-organised and cooperative where local information is exchanged among network nodes. This can be achieved using the multi-user detection method (Verdú (1998)), which requires all the sender nodes to send a constant power pilot tone to the receiver node. This technology is currently embedded in all IEEE802.11 a/b/g wireless cards.

Furthermore, it is presumed that every network node cooperates with each other to achieve a common goal of interference mitigation. As a consequence if this, the following supplementary assumptions are made:

- At each instantaneous time the number of co-channel links, $M$ is known for any sender and receiver nodes in the system

- The link gains between a receiver node $r_i$ and its sender node $s_i$, and other co-channel interfering nodes $s_j$, $j = 1,2,...,M$, $j \neq i$ can be measured.

The method begins with the arrival of a new pair of nodes $(r_i,s_i)$ wishing to enter an ad hoc wireless network, such as that shown in Figure 1. At step S100, the sending node $s_i$ will select a channel to use, either randomly or based on previous use. At step S110, the sending node will then send a beacon signal (either via smart antenna or beamforming technology) to determine the number and position of other nodes that are using that particular channel. The sending node will also determine the ratio of link gain $V = \dfrac{G_{r_i s_i}(t)}{\sum\limits_{j \neq i} G_{r_i s_j}(t)}$ between the pair of nodes $(r_i,s_i)$ and the other nodes using that channel. The link gain ratios will be updated throughout the admission process.

At step S120 the sending node sets a timer, t, to zero and a counter, k, to zero. The sending node will contain within its internal memory a pre-set termination criteria time, ($T > 0$, which may be set in accordance with the manufacturer's specification) to assess the quality of the channel. If at step S130 the timer t is less than or equal to T then the node will determine estimates for the values of the parameters $\hat{\mu}$, $\hat{\sigma}$, $\hat{\lambda}$, $\hat{\mu}_J$, $\hat{\sigma}_J \in \mathfrak{R}_+$ of the jump-diffusion process at step S140. At step S150, the probability of the sending node being admitted to the network using that channel can be calculated using the formula

$$p_k = \text{Prob}\big(V(t + \Delta t) \geq \gamma_{r_i}^{\infty} \,\big|\, V(t)\big)$$ where $p_k$ constitutes the $k$-th probability of successful admission at time $t + \Delta t$.

At step S160, the counter k is incremented by one and the timer value t is incremented by the interval before the process returns to step S130 and the comparison of t against T. This loop continues, until the value of t is greater than T, at which point the process continues from step S130 to step S170. At step S170, the mean probability of successful admission, $\bar{p}$, is calculated, based on each of the values of $p_k$ that were determined during each of the instances of step S150. If $\bar{p} \geq 1 - \alpha$ then at step S180 the nodes $(r_i,s_i)$ are admitted into the network.

At step S185, the transmit power level for nodes $(r_i,s_i)$ are the adjusted using equation 7 above (S185). If at stage S190 the transmitted power level for that time interval, $P_i(t + \Delta t)$ is greater than the maximum power level, $P_{max}$ then the pair of nodes $(r_i,s_i)$ can not remain admitted in the network. Thus, at step S200 the nodes determine whether the time spent attempting to access the channel exceeds a predetermined limit: if not then the process can return to step S100 in an attempt to access a further channel. If the predetermined time limit has been exceeded then the process is exited at stage S250. The nodes may attempt to access the same or a different channel after a given period of time.

Returning to step S170, if $\bar{p} < 1 - \alpha$ then the process continues to step S210 where the nodes determine whether the time spent attempting to access the channel exceeds a predetermined limit. If not then the process can return to step S100 in an attempt to access a further channel. If the predetermined time limit has been exceeded then the process is exited at stage S220. The nodes may attempt to access the same or a different channel after a given period of time.

If at stage S190 the transmitted power level for that time interval, $P_i(t + \Delta t)$ is less than or equal to the maximum power level, $P_{max}$ then at S230 the terminal waits for a pre-defined delay period $\Delta T$. Once this time period $\Delta T$ has elapsed then the nodes $(r_i,s_i)$ will decide whether to exit from the process: if so they exit at step S250. If not, that is they still wish to use the ad hoc communications network, the process returns to S185, where the transmit power can be adjusted and then compared with the maximum power level. Thus, it can be seen that each of the nodes in the ad hoc network are continually adjusting their transmission power to ensure that it does not cause interference at other network nodes. This adjustment is made periodically, for example every 100 ms, although shorter or longer time periods may be used, for example between 10 and 1000 ms. If a node does exceed the maximum allowed power level then it is necessary for the node to then access a further channel.

It will be understood from the foregoing discussion that the present invention is suitable for use in any wireless communications network, regardless of the transmission protocol used, i.e. Bluetooth, WiFi, WiMax, etc. It will be understood that a suitable terminal may take the form of a personal digital assistant (PDA), laptop computer, ultra mobile PC, smart phone, mobile telephone, etc. The functionality that enables the terminal to perform the method of the present invention may be provided by altering the software of the terminal or providing an additional computer program or application. It will be understood that such software may be deployed to mobile terminals and/or servers via download, for example via the internet, or on some physical media, for example, DVD, CD-ROM, USB memory stick.

**Claims**

1. A method of selecting a channel in an ad hoc wireless method for use by a sending node and a receiving node, the method comprising the steps of:

   (a) choosing a channel for potential use;
   (b) determining the number and the position of other nodes using the channel chosen in step (a);
   (c) for each of a plurality of iterations,

      (1) determining a plurality of transmission parameters;
      (2) determining an admission probability value in accordance with the plurality of transmission parameters determined in step (1);

   (d) determining a mean admission probability value in accordance with each of the determined admission probability values; and
   (e) comparing the mean admission probability with a predetermined threshold; and
   (f) allowing the sending node and the receiving node to used the channel selected in step (a) if the mean admission probability is equal to or greater than the predetermined threshold.

2. A method according to claim 1, comprising the further steps of:

   (g) adjusting the transmission power of all of the nodes using the channel selected in step (a) to control the interference caused by other nodes; and
   (h) preventing the sending node and the receiving node from using the channel selected in step (a) if the transmission power of any of the nodes using the channel selected in step (a) is greater than a predetermined threshold.

3. A method according to claim 2, wherein each node using the channel selected in step (a) repeats steps (g) and (h) periodically.

4. A method according to claim 3, wherein each node repeats steps (g) and (h) substantially every 100 ms.

5. A computer program product, comprising computer executable code for performing a method according to any of Claims 1 to 4.

10

20g

20f

20a

20b

20d

20c

20h

20e

Figure 1

Figure 2

**European Patent Office**

## EUROPEAN SEARCH REPORT

**Application Number**

EP 08 25 0840

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/253341 A1 (ATKINSON GARY W [US] ET AL) 1 November 2007 (2007-11-01) * paragraphs [0115] - [0120], [0123] - [0126], [0131], [0132] * ----- | 1-5 | INV. H04L12/56 |
| A | WO 2007/052249 A (ISRAEL AEROSPACE IND LTD [IL]; PLUTOV ALEXANDER [IL]; REUVENI RAN [IL]) 10 May 2007 (2007-05-10) * abstract * * page 15, lines 23-28 * * page 31, line 11 - page 36, line 27 * ----- | 1-5 | |
| A | US 7 260 100 B1 (SNODGRASS TIMOTHY E [US]) 21 August 2007 (2007-08-21) * abstract * * column 3, line 62 - column 4, line 67 * * column 7, line 11 - column 8, line 30 * ----- | 1-5 | |

**TECHNICAL FIELDS SEARCHED (IPC)**

H04L

The present search report has been drawn up for all claims

| Place of search | Date of completion of the search | Examiner |
|---|---|---|
| Munich | 30 September 2008 | Isopescu, Ciprian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 25 0840

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2008

| Patent document cited in search report | | Publication date | Patent family member(s) | | Publication date |
|---|---|---|---|---|---|
| US 2007253341 | A1 | 01-11-2007 | NONE | | |
| WO 2007052249 | A | 10-05-2007 | EP | 1949617 A2 | 30-07-2008 |
| | | | GB | 2433677 A | 27-06-2007 |
| US 7260100 | B1 | 21-08-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. M. Aein.** Power balancing in systems reemploying frequency reuse. *COMSAT Tech. Rev.,* 1973, 277-299
- **G. J. Foschini et al.** A simple distributed autonomous power control algorithm and its convergence. *IEEE Transactions on Vehicular Technology,* November 1993, vol. 42 (4
- **S.A. Grandhi et al.** Centralized power control in cellular radio systems. *IEEE Transactions on Vehicular Technology,* 1993, vol. 42 (4), 466-468
- **M. Andersin et al.** Gradual removals in cellular radio networks. *Wireless Networks,* 1996, vol. 2 (1), 27-43
- **N. Bambos et al.** Channel access algorithms with active link protection for wireless communications networks with power control. *IEEE/ACM Transactions on Networking,* 2000, vol. 8 (5), 583-597
- **J. Zander.** Distributed Co-channel Interference Control in Cellular Radio Systems. *IEEE Transactions on Vehicular Technology,* August 1992, vol. 41 (3), 305-311
- **Chin et al.** Predictive call admission control algorithm for power-controlled wireless systems. *Ad-Hoc Now 2006, Lecture Notes in Computer Science,* 2006, vol. 4104, 414-427
- **M.M.-L. Cheng et al.** Performance evaluation of distributed measurement-based dynamic channel assignment in local wireless communications. *IEEE Journal on Selected Areas in Communications,* May 1996, vol. 14 (4), 698-710
- **G. Kulkarni et al.** Channel Allocation for OFDMA based Wireless Ad-hoc Networks. *SPIE International Conference on Advanced Signal Processing Algorithms, Architectures, and Implementations,* July 2002
- **DJ Goodman et al.** Distributed dynamic channel assignment schemes. *Proc. IEEE Vehicular Technology Conference,* 1993, 532-535
- **J. C.-I. Chuang ; N.R. Sollenberger.** Performance of autonomous dynamic channel assignment and power control for TDMA/FDMA wireless access. *IEEE J. Select. Areas Commun.,* October 1994, vol. 12, 1314-1324
- **T. Holliday et al.** Distributed power and admission control for time varying wireless networks. *Technical Report,* 2004
- **N Bambos et al.** Channel access algorithms with active link protection for wireless communications networks with power control. *IEEE/ACM Transactions on Networking,* 2000, vol. 8 (5), 583-597